# EUROPÄISCHE PATENTSCHRIFT

(11) **EP 1 157 451 B1**
(45) Veröffentlichungstag und Bekanntmachung des Hinweises auf die Patenterteilung: **15.01.2003**
(21) Anmeldenummer: 00910687.3
(22) Anmeldetag: 22.02.2000
(51) Int. Cl.: H02G 11/02

(54) **SCHLEIFKONTAKTVORRICHTUNG FÜR KABELTROMMELN**
SLIDING CONTACT DEVICE FOR CABLE DRUMS
DISPOSITIF DE CONTACTS A FROTTEMENT POUR ENROULEURS DE CABLES

(30) Priorität: 22.02.1999 DE 29903183 U
(43) Veröffentlichungstag der Anmeldung: 28.11.2001
(73) Patentinhaber: H. Hench GmbH, 99846 Seebach/Thüringen (DE)
(72) Erfinder: FROEHLICH, Ulrich, D-99891 Schmerbach (DE)
(74) Vertreter: Bardehle, Heinz, Dipl.-Ing.
(86) Internationale Anmeldenummer: EP0001426
(87) Internationale Veröffentlichungsnummer: WO00051215

(56) Entgegenhaltungen:
- DE-A- 2 756 023
- DE-A- 3 040 664
- DE-U- 7 608 648

## Beschreibung

Die Erfindung betrifft eine Schleifkontaktvorrichtung für Kabeltrommeln gemäß dem Oberbegriff des Anspruchs 1.

Eine derartige Schleifkontaktvorrichtung ist aus DE 27 56 023 bekannt. Die bekannte Schleifkontaktvorrichung verwendet als radialsymmetrische Kontaktflächen-Schleifringe, die auf einem Ansatz angeordnet sind. Mit der Kabeltrommel drehen sich vorgewölbte Kontaktfedern, die auf den Schleifringen unter Ausbildung eines Kontaktdruckes schleifen.

Eine derartige Schleifkontaktvorrichtung, die auf Kontaktringen basiert, hat den Nachteil, daß sie eine hohe Einbautiefe erfordert, zumal sich die radialsymmetrischen Kontaktflächen axial erstrecken. Auch die blattfederartig ausgebildeten vorgewölbten Kontaktfedern der bekannten Schleifkontaktvorrichtung haben nachteilig einen großen Raumbedarf. Darüber hinaus belasten die blattfederartigen Schleifkontakte einseitig die Lagerung der Kabeltrommel.

Aus der Druckschrift DE 30 40 644 A1, die den nächstliegenden Stand der Technik darstellt, sind scheibenförmige Kontaktflächen von parallel zueinander angeordneten Scheiben bekannt. Diese bekannten Scheiben mit Kontaktflächen sind axial in ihrer Position frei beweglich und werden durch die auf die Scheiben steckbaren Schleifkontakte axial in Position gehalten. Dazu sitzen die Scheiben unmittelbar auf einem Trommelachsabsatz.

Aus der Druckschrift GM 76 08 648 sind scheibenförmige Schleifkontakte bekannt, die axial fixiert sind und dabei axial aufeinandergepreßt werden, um einen Schleifkontakt zu realisieren. Für die elektrische Kontaktgabe werden zwei Scheiben aufeinandergepreßt, so daß sich eine großflächige Verschleißfläche zwischen den Kontaktschelben und den Schleifkontakten ausbildet.

Aufgabe der Erfindung ist es, die Nachteile im Stand der Technik zu überwinden und eine Schleifkontaktvorrichtung anzugeben, die einen geringen Platzbedarf erfordert, eine hohe Kontaktsicherheit gewährleistet und welche die radialsymmetrischen Kontaktflächen nicht einseitig belastet.

Gelöst wird diese Aufgabe mit den Merkmalen des Gegenstands des Anspruchs 1. Merkmale bevorzugter Ausführungsformen der Erfindung werden in weiteren Ansprüchen angegeben.

Da sich bei der erfindungsgemäßen Lösung die Schleifkontakte, die sich mit der Kabeltrommel auf den radialsymmetrischen Kontaktflächen drehen, beidseitig der erfindungsgemäßen Kontaktscheiben abstützen, wirkt in vorteilhafter Weise der Kontaktdruck nicht einseitig auf die radialsymmetrische Kontaktfläche, die hier als scheibenförmige Kontaktfläche ausgebildet ist, sondern der Druck der Schleifkontakte kann sich aufheben, da sich die Schleifkontakte beidseitig der Scheiben abstützen. Lediglich ein Torsionsmoment ist von den Scheiben auf den Kabeltrommelträger zu übertragen. Damit ist weiterhin der Vorteil verbunden, daß keine großflächige Abstützung der radialsymmetrischen Kontaktflächen auf einem Achsansatz erforderlich ist. Darüber hinaus muß der Kontaktdruck nicht durch die Trommellager der Kabeltrommel aufgenommen werden, so daß sich die Kabeltrommellagerung vereinfacht und weniger verschleißt. Eine besondere Verstärkung oder Versteifung der Scheiben, die die radialsymmetrischen Kontaktflächen tragen, ist aufgrund der beiseitigen Anordnung der Schleifkontakte nicht erforderlich. Die Scheiben können folglich äußerst platzsparend und dünn ausgeführt werden. Sie müssen lediglich eine begrenzte Formsteifigkeit besitzen und können folglich vorzugsweise aus Blechen oder formsteifen Folien hergestellt sein.

Die Scheiben mit den beidseitigen Kontaktflächen sitzen auf einem Tragkörper, der mit einem Kabeltrommelträger lösbar verbunden ist. Dieser Tragkörper ist in dem Kabeltrommelträger derart angeordnet, daß die scheibenförmigen Kontaktflächen koaxial zur Drehachse der Kabeltrommel ausgerichtet sind. Dazu ist der Tragkörper auf einen feststehenden Kabeltrommelachsansatz aufsteckbar.

Zur sicheren Führung und für einen schnellen und sicheren Einbau der Scheiben mit scheibenförmigen Kontaktflächen auf dem Tragkörper weist dieser noch axiale Führungs- und Kodierungsnuten auf, in die radial einwärts gerichtete Vorsprünge des Innenrandes der Scheiben eingreifen.

Zur Arretierung der Scheiben weist der Tragkörper sich axial erstreckende Schnapphaken auf. Bei der Montage gleitet die Scheibe in axialer Richtung über einen derartigen Schnapphaken und rastet dann mit ihrem Innenrand an der durch den Schnapphaken festgelegten Position ein. Dazu trägt der Schnapphaken radial auswärts gerichtete Arretierungsnoppen für die Scheibe.

In einer bevorzugten Ausführungsform der Erfindung sind die scheibenförmigen Kontaktflachen aus mindestens zwei Metallscheiben gebildet, wobei eine der Metallscheiben den Stromrückleiter versorgt und die andere der Metallscheiben für die Phase der Stromzuführung zur Verfügung steht. Diese Ausführungsform hat den Vorteil, daß für jede Zuleitung aufgrund der beidseitigen Abstützung der Schleifkontakte an den scheibenförmigen Kontaktflächen eine Doppelkontaktierung zur Verfügung steht, die darüber hinaus unabhängig von der Genauigkeit der Kabeltrommellagerung ist und deshalb einen vollkommen gleichförmigen Kontaktdruck während der Drehung der Kabeltrommel aufweist.

In einer weiteren bevorzugten Ausführungsform der Erfindung sind die radialsymmetrischen Kontaktflächen scheibenförmige Kontaktflächen einer beidseitig scheibenförmig metallbeschichteten Isolatorscheibe. Diese Ausführungsform hat den Vorteil, daß für die beiden Spannungspole oder den Nulleiter und den Phasenleiter nur eine einzige Scheibe erforderlich ist und somit die axiale Erstreckung der Schleifkontaktvorrichtung weiter vermindert werden kann. Aufgrund der sich beidseitig der Scheibe abstützenden Schleifkontakte werden beide metallbeschichteten scheibenförmigen Kontaktflächen einer Isolatorscheibe verwendet, so daß die Isolatorscheibe selbst in ihrer radialen Erstreckung einen geringen Bauraum erfordert.

Vorzugsweise ist der Tragkörper aus isolierendem Material aufgebaut, insbesondere, wenn er für Metallscheiben als Kontaktflächenträger vorgesehen ist. Der Tragkörper kann jedoch auch aus einem metallischen Werkstoff hergestellt sein, wenn die Scheibe eine beidseitig scheibenförmig metallbeschichtete Isolatorscheibe ist.

In den axialen Führungsnuten des Tragkörpers gleiten beim Einbau der Scheibe vorzugsweise im rechten Winkel zur Kontaktscheibe abgewinkelte Kontaktfahnen, während gleichzeitig über die Kodierungsnuten die Lage der Kontaktfahne auf dem Umfang des Tragkörpers festgelegt ist.

Um eine sichere Ausrichtung der Scheiben vertikal zur Drehachse der Kabeltrommel zu erreichen, weist der Tragkörper mindestens drei Schnapphaken auf seinem Umfang verteilt für eine Scheibe auf. Für zwei Scheibenpositionen müssen entsprechend unterschiedliche Schnapphaken auf dem Umfang des Tragkörpers verteilt werden oder es weist vorzugsweise jeder Schnapphaken mehrere Arretierungsnoppen entsprechend der Anzahl der Scheibenpositionen auf.

Bei einer weiteren Ausfuhrungsform der Erfindung weist die Scheibe mit den beidseitigen Kontaktflächen an ihrem Innenrand mindestens eine in axialer Richtung abgewinkelte Kontaktfahne auf, die als Flachstecker ausgebildet ist. Diese Kontaktfahne kann aus dem Tragkörper radial als Flachstecker herausragen, so daß vorteilhaft eine einfach zu montierende Steckverbindung zu dem elektrischen Verbraucher in dem Gerät, in dem die Kabeltrommel angeordnet ist, möglich wird. Vorzugsweise ist eine darartige Scheibe mit den beidseitigen Kontaktflächen und einer abgewinkelten Kontaktfeder einstückig ausgeführt und wird vorzugsweise mit radial einwärts gerichteten Vorsprüngen zum Eingriff in die Kodiernuten des Tragkörpers aus einem Stück Blech gestanzt und geformt.

Der Tragkörper ist vorzugsweise ein Spritzgußteil, wenn er aus einem Kunststoff hergestellt ist. Der Tragkörper als Spritzgußteil ist vorzugsweise derart geformt, daß mindestens zwei Scheiben mit beidseitig scheibenförmigen Kontaktflächen und mindestens jeweils einer Kontaktfahne auf dem Tragkörper derart aufsteckbar sind, daß die Kontaktfahnen auf dem Umfang des Tragkörpers verteilt und voneinander isoliert angeordnet sind. Mit einer derartigen Konstruktion wird ein kompaktes Bauelement erreicht, das in einfacher Weise zusammensteckbar ist und von dem Kabeltrommelträger in einer zentralen Position aufgenommen werden kann.

Die mit der Kabeltrommel drehenden Schleifkontakte sind vorzugsweise als Schleifbacken ausgebildet, die paarweise die scheibenförmigen Kontaktflächen einer Scheibe unter Vorspannung schleifend berühren. Insofern ist diese Lösung der zugrundeliegenden Aufgabe mit dem Übergang in der Bremstechnik von einer Trommelbremse zu den Scheibenbremsen vergleichbar und revolutioniert in ähnlicher Weise die Konstruktion von Schleifkontaktvorrichtungen in Kabeltrommeln.

In einer bevorzugten Ausführungsform werden die mit der Kabeltrommel drehenden Schleifbacken einstückig aus einem gestanzten und geformten Stück Blech gebildet. Die in der Weise gebildeten Schleifbacken können jeweils eine Kontaktfahne aufweisen, die für eine Quetschverbindung geeignet ist und welche die Kabelenden der Kabeltrommel aufnimmt. Die Schleifkontakte werden dazu vorzugsweise derart geformt, daß sie beidseitig die Scheibe umfassen und radial auswärts von dem Scheibenaußenrand zusammengeführt sind.

Weitere Merkmale und Vorteile einer bevorzugten Ausführungsform der Erfindung werden nun anhand der Zeichnungen erläutert.
- Fig. 1: ist ein Querschnitt durch eine Ausführungsform der Schleifkontaktvorrichtung.
- Fig. 2: ist eine auseinandergezogene Darstellung einer Kontaktscheibe mit Schleifkontakten.
- Fig. 3: ist eine perspektivische Ansicht eines Tragkörpers für Kontaktscheiben.

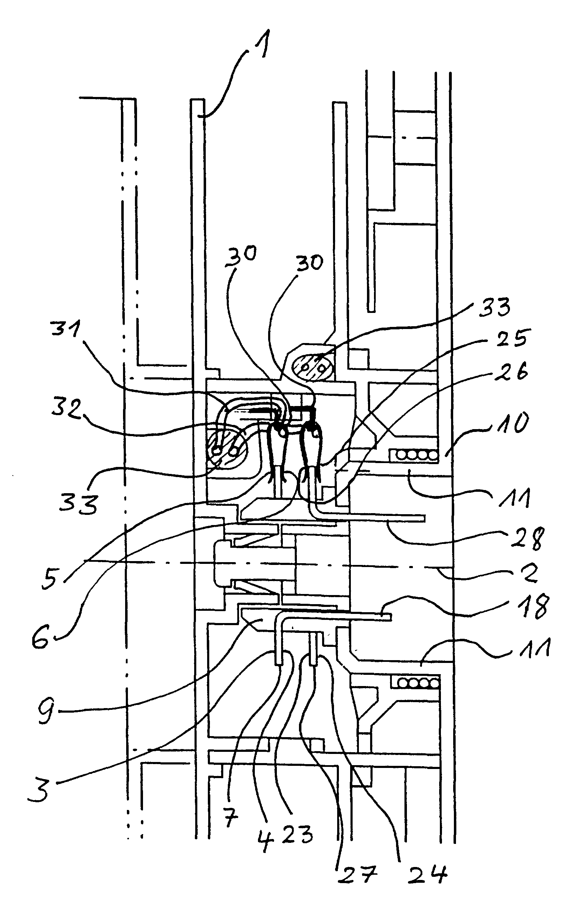

Fig. 1 ist ein Querschnitt durch eine Ausführungsform der Schleifkontaktvorrichtung für Kabeltrommeln 1. Diese Ausführungsform weist vier radialsymmetrische Kontaktflächen 3, 4, 23 und 24 auf. Diese Kontaktflächen sind scheibenförmig und werden von den Scheiben 7 und 27 getragen. Auf beiden Seiten der Scheiben 7 und 27 stützen sich Schleifkontakte 5, 6, 25 und 26 ab. Während die Scheiben 7, 27 über einen Tragkörper 9 mit dem Kabeltrommelträger 10 feststehend verbunden sind, werden die Schleifkontakte 3, 4, 23 und 24 mit der Kabeltrommel 1 gedreht. Die Scheiben 7 und 27 tragen abgewinkelte Kontaktfahnen 18 und 28, an die ein elektrischer Verbraucher eines Gerätes, in das die Kabeltrommel 1 eingebaut ist, angeschlossen werden kann. Die Kontaktfahnen 18 und 28 werden ebenfalls von dem Tragkörper in Position gehalten, der mit dem Kabeltrommelträger 10 lösbar verbunden ist. Um die Zentrierung des Tragkörpers und der Scheiben zu gewährleisten, ist der Tragkörper auf einem feststehenden Kabeltrommelachsansatz 11 aufgesteckt.

In dieser Ausführungsform sind die Scheiben, welche die scheibenförmigen Kontaktflächen tragen, einstückig aus Metallblech hergestellt und der Tragkörper 9 ist aus isolierendem Material. Die Schleifkontakte sind paarweise als Schleifbacken ausgebildet und mit den Kabelenden 31, 32 des auf die Kabeltrommel aufgewickelten Kabels 33 verbunden. Somit wird über die Kontaktfahnen 18 und 28, die scheibenförmigen Kontaktflächen 3, 4, 23 und 24 und die Schleifbacken 30 eine elektrische Verbindung zwischen dem Verbraucher, vorzugsweise einem Reinigungsgerät wie einem Staubsauger, zu dem Zuleitungskabel auf der Kabeltrommel mittels einer raumsparenden und kostengünstig herstellbaren Schleifkontaktvorrichtung hergestellt.

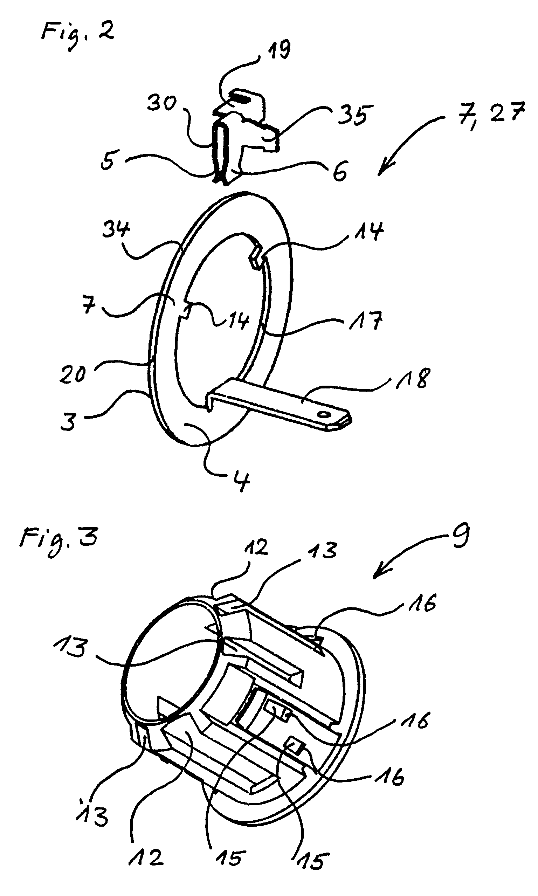

Fig. 2 ist eine auseinandergezogene Darstellung einer Kontaktscheibe 7 mit Schleifkontakten 5 und 6. Die Scheibe hat zwei scheibenförmige Kontaktflächen 3 und 4, die im zusammengebauten Zustand mit den Schleifkontakten 5 und 6 zusammenwirken. Die Scheibe 7 kann aus einem dünnen Blechstreifen hergestellt werden, da kein einseitig wirkender Kontaktdruck durch die paarweise und beidseitig angeordneten Schleifkontakte 5 und 6 auf sie ausgeübt wird, vielmehr heben sich die Kontaktdrücke der federnden Schleifkontakte 5 und 6 gegeneinander auf. Die Schleifkontakte sind radial auswärts vom Außenrand 34 der Scheibe 7 zusammengeführt und weisen eine Kontaktfahne 19, die für eine Quetschverbindung für ein Kabelende geeignet ist, auf. Darüber hinaus weist die Schleifbacke 30 dieser Ausführungsform ein Schleifkontaktpaar 5 und 6, eine Kontaktfahne 19, und eine Befestigungsfahne 35 auf, die im Achsenbereich der Kabeltrommel 1 einsteckbar ist. Die gesamte Schleifbacke 30 ist einstückig aus einem Blechstreifen gestanzt und geformt.

Fig. 3 ist eine perspektivische Ansicht eines Tragkörpers 9 für Kontaktscheiben 7, 27 oder Fig. 2. Der Tragkörper 9 ist in dieser Ausführungsform ein Spritzgußteil eines Kunststoffes und weist an seinem Außenumfang Kodierungsnuten 13 auf, die mit Vorsprüngen 14 des Innenrandes 17 der Scheiben 7, 27, wie in Fig. 2 gezeigt, zusammenwirken. Diese Kodierungsnuten im Zusammenwirken mit den Vorsprüngen 14 dienen gleichzeitig dazu, daß sich die Scheibe relativ zum Tragkörper 9 nicht verdrehen kann und die Torsionsmomente auf den Tragkörper übertragen werden. Darüber hinaus weist der Tragkörper 9 Führungsnuten 12 auf, in denen eine abgewinkelte Kontaktfahne 18, wie in Fig. 2 gezeigt, geführt wird.

Zur Positionierung der Scheiben 7, 27, wie in Fig. 1 und 2 gezeigt, weist der Tragkörper an seinem Umfang verteilt Schnapphaken 15 auf, die sich in axialer Richtung erstrecken. Zur Arretierung der Scheiben 7 und 27 in ihren Positionen auf dem Tragkörper 9 weist jeder Schnapphaken entsprechende Arretierungsnoppen 16 auf.

## Patentansprüche

1. Schleifkontaktvorrichtung für Kabeltrommeln (1) mit mindestens zwei zur Achse (2) einer Kabeltrommel (1) radialsymmetrischen Kontaktflächen und mindestens zwei mit der Kabeltrommel (1) drehenden Schleifkontakte (5, 6, 25, 26), die auf den radialsymmetrischen Kontaktflächen unter einem Kontaktdruck schleifen, wobei die radialsymmetrischen Kontaktflächen scheibenförmige Kontaktflächen (3, 4, 23, 24) von wenigstens einer Scheibe (7, 27) sind und sich die Schleifkontakte (5, 6, 25, 26) schleifend und federnd gegen die scheibenförmigen Kontaktflächen beidseitig der Scheibe (7, 27) abstützen und die Scheibe (7, 27) auf einem Tragkörper (9) sitzt, **dadurch gekennzeichnet, daß** der Tragkörper (9) auf einen feststehenden Kabeltrommelachsansatz (11) lösbar aufsteckbar ist, wobei der Tragkörper (9) axiale Führungsnuten (12) zur Aufnahme einer Kontaktfahne (18) der Scheibe (7, 27) und Kodierungsnuten (13) aufweist, in welche Kodierungsnuten (13) radial einwärts gerichtete Vorsprünge (14) des Innenrandes (17) der Scheibe (7, 27) eingreifen und wobei der Tragkörper (9) sich axial erstreckende Schnapphaken (15) aufweist, die radial auswarts gerichtete Arretierungsnoppen (16) tragen, zwischen denen die Scheiben (7, 27) zur axialen Positionierung mit ihrem Innenrand (17) lösbar eingerastet sind.

2. Schleifkontaktvorrichtung nach Anspruch 1, **dadurch gekennzeichnet, daß** die scheibenförmigen Kontaktflächen (3, 4, 23, 24) von mindestens zwei Metallscheiben (7, 27) gebildet sind.

3. Schleifkontaktvorrichtung nach Anspruch 1, **dadurch gekennzeichnet, daß** die radialsymmetrischen Kontaktflächen scheibenförmige Kontaktflächen einer beidseitig, scheibenförmig metallbeschichteten Isolierscheibe sind.

4. Schleifkontaktvorrichtung nach einem der Ansprüche 1 bis 3, **dadurch gekennzeichnet, daß** der Tragkörper (9) aus isolierendem Material ist.

5. Schleifkontaktvorrichtung nach einem der Ansprüche 1 bis 4, **dadurch gekennzeichnet, daß** mindestens zwei Schnapphaken (15) auf dem Umfang des Tragkörpers (9) verteilt sind.

6. Schleifkontaktvorrichtung nach Anspruch 1 bis 5, **dadurch gekennzeichnet, daß** jeder Schnapphaken (15) Arretierungsnoppen (16) für mindestens zwei Scheibenpositionen aufweist.

7. Schleifkontaktvorrichtung nach einem der vorhergehenden Ansprüche, **dadurch gekennzeichnet, daß** die Scheibe (7, 27) mit den beidseitigen Kontaktflachen (3, 4, 23, 24) am Innenrand (17) mindestens eine in axialer Richtung abgewinkelte Kontaktfahne (18) aufweist.

8. Schleifkontaktvorrichtung nach Anspruch 7, **dadurch gekennzeichnet, daß** die Kontaktfahne (18) als Flachstecker ausgebildet ist.

9. Schleifkontaktvorrichtung nach einem der vorhergehenden Ansprüche, **dadurch gekennzeichnet, daß** die Scheiben (7, 27) mit den beidseitigen Kontaktflächen (3, 4, 23, 24) und einer abgewinkelten Kontaktfahne (18) einstukkig sind.

10. Schleifkontaktvorrichtung nach Anspruch 7, **dadurch gekennzeichnet, daß** die Scheibe (7, 27) mit den beidseitigen Kontaktflächen (3, 4, 23, 24) mit radial einwärts gerichteten Vorsprüngen (14) und einer zum Innenrand (17) der Scheibe (7, 27) ansetzenden Kontaktfahne (18) aus einem Stuck Blech gestanzt und geformt ist.

11. Schleifkontaktvorrichtung nach einem der Ansprüche 1 bis 10, **dadurch gekennzeichnet, daß** der Tragkörper (9) ein Spritzgußteil ist.

12. Schleifkontaktvorrichtung nach einem der vorhergehenden Ansprüche, **dadurch gekennzeichnet, daß** mindestens zwei Scheiben (7, 27) mit beidseitig scheibenförmigen Kontaktflächen (3, 4, 23, 24) und mindestens jeweils einer Kontaktfahne (18) auf den Tragkörper (9) derart aufsteckbar sind, daß die Kontaktfahnen (18) auf dem Umfang des Tragkörpers (9) verteilt und voneinander isoliert angeordnet sind.

13. Schleifkontaktvorrichtung nach einem der vorhergehenden Ansprüche, **dadurch gekennzeichnet, daß** die mit der Kabeltrommel (1) drehenden Schleifkontakte (5, 6, 25, 26) als Schleifbacken (30) ausgebildet sind, die paarweise die scheibenförmigen Kontaktflächen (3, 4, 23, 24) der Scheibe (7, 8) unter Vorspannung schleifend berühren.

14. Schleifkontaktvorrichtung nach Anspruch 13, **dadurch gekennzeichnet, daß** die mit der Kabeltrommel (1) drehenden Schleifkontakte (5, 6, 25, 26) als Schleifbacken (30) einstückig aus einem gestanzten und geformten Stück Blech gebildet sind.

15. Schleifkontaktvorrichtung nach einem der Ansprüche 13 oder 14, **dadurch gekennzeichnet, daß** die mit der Kabeltrommel (1) drehenden Schleifbacken (30) jeweils eine Kontaktfahne (19) aufweisen, die für eine Quetschverbindung geeignet ist und die jeweils ein Kabelende (31, 32) des Kabels (33) der Kabeltrommel (1) aufnimmt.

16. Schleifkontaktvorrichtung nach einem der Ansprüche 13 bis 15, **dadurch gekennzeichnet, daß** die mit der Kabeltrommel (1) drehenden Schleifkontakte (5, 6, 25, 26) die Scheibe (7, 27) beidseitig umfassen und radial auswärts von dem Scheibenaußenrand (34) zu einer Schleifbacke (30) zusammengeführt sind.

## Claims

1. Sliding contact device for cable drums (1) comprising at least two contact surfaces radially symmetrical to the axis (2) of a cable drum (1) and at least two sliding contacts (5, 6, 25, 26) which rotate with the cable drum (1) and slide on the radially symmetrical contact surfaces with contact pressure, the radially symmetrical contact surfaces being disc-shaped contact surfaces (3, 4, 23, 24) of at least one disc (7, 27) and the sliding contacts (5, 6, 25, 26) being supported in a sliding and resilient manner against the disc-shaped contact surfaces on both sides of the disc (7, 27) and the disc (7, 27) being seated on a supporting body (9), **characterised in that** the supporting body (9) can be removably mounted on a fixed cable drum axle shoulder (11), the supporting body (9) having axial guide grooves (12) for receiving a contact tab (18) of the disc (7, 27) and coding grooves (13) engaged by radially inwardly directed projections (14) on the inner edge (17) of the disc (7, 27) and the supporting body (9) having axially extending snap hooks (15) provided with radially outwardly directed locking knobs (16) between which the discs (7, 27) can be releasably locked into place by means of their inner edges (17) for axial positioning.

2. Sliding contact device according to claim 1, **characterised in that** the disc-shaped contact surfaces (3, 4, 23, 24) are formed by at least two metal discs (7, 27).

3. Sliding contact device according to claim 1, **characterised in that** the radially symmetrical contact surfaces are disc-shaped contact surfaces of an insulating disc coated with metal in a disc-shaped manner on both sides.

4. Sliding contact device according to one of claims 1 to 3, **characterised in that** the supporting body (9) is made of insulating material.

5. Sliding contact device according to one of claims 1 to 4, **characterised in that** at least two snap hooks (15) are distributed over the circumference of the supporting body (9).

6. Sliding contact device according to claims 1 to 5, **characterised in that** each snap hook (15) has locking knobs (16) for at least two disc positions.

7. Sliding contact device according to one of the preceding claims, **characterised in that** the disc (7, 27) with contact surfaces (3, 4, 23, 24) on both sides is provided on its inner edge (17) with at least one contact tab (18) angled in the axial direction.

8. Sliding contact device according to claim 7, **characterised in that** the contact tab (18) is in the form of a flat plug.

9. Sliding contact device according to one of the preceding claims, **characterised in that** the discs (7, 27) with contact surfaces (3, 4, 23, 24) on both sides and an angled contact tab (18) are made in one piece.

10. Sliding contact device according to claim 7, **characterised in that** the disc (7, 27) with contact surfaces (3, 4, 23, 24) on both sides is blanked and formed from a piece of sheet metal with radially inwardly directed projections (14) and a contact tab (18) attached to the inner edge (17) of the disc (7, 27).

11. Sliding contact device according to one of claims 1 to 10, **characterised in that** the supporting body (9) is an injection moulded part.

12. Sliding contact device according to one of the preceding claims, **characterised in that** at least two discs (7, 27) with disc-shaped contact surfaces (3, 4, 23, 24) on both sides and at least one respective contact tab (18) can be mounted on the supporting body (9) in such a manner that the contact tabs (18) are distributed over the circumference of the supporting body (9) and are arranged in such a manner that they are insulated from one another.

13. Sliding contact device according to one of the preceding claims, **characterised in that** the sliding contacts (5, 6, 25, 26) rotating with the cable drum (1) are in the form of sliding jaws (30) coming into sliding contact in pairs with the disc-shaped contact surfaces (3, 4, 23, 24) of the disc (7, 8) with pretensioning.

14. Sliding contact device according to claim 13, **characterised in that** the sliding contacts (5, 6, 25, 26) rotating with the cable drum (1) are in the form of sliding jaws (30) formed in one piece from a blanked and formed piece of sheet metal.

15. Sliding contact device according to either of claims 13 or 14, **characterised in that** the sliding jaws (30) rotating with the cable drum (1) each have a contact tab (19) suitable for a crimped connection and receiving one respective end (31, 32) of the cable (33) of the cable drum (1).

16. Sliding contact device according to one of claims 13 to 15, **characterised in that** the sliding contacts (5, 6, 25, 26) rotating with the cable drum (1) embrace the disc (7, 27) on both sides and are brought together to form a sliding jaw (30) radially outwardly of the outer edge (34) of the disc.

## Revendications

1. Dispositif à contacts glissants, pour des tambours à câble (1) comportant au moins deux surfaces de contact, qui présentent une symétrie radiale par rapport à l'axe (2) d'un tambour à câble (1), et au moins deux contacts glissants (5, 6, 25, 26), qui tournent avec le tambour à câble (1) et glissent sur les surfaces de contact à symétrie radiale, sous une pression de contact, dans lequel les surfaces de contact à symétrie radiale sont des surfaces de contact en forme de disques (3, 4, 23, 24) d'au moins un disque (7, 27) et les contacts glissants (5, 6, 25, 26) prennent appui en glissant, de façon élastique, contre les surfaces de contact en forme de disques, des deux côtés du disque (7, 27) et le disque (7, 27) est monté sur un corps de support (9), **caractérisé en ce que** le corps de support (9) est enfichable de façon amovible sur un embout fixe (11) de l'axe du tambour à câble, le corps de support (9) comportant des rainures axiales de guidage (12) servant à loger une languette de contact (18) du disque (7, 27), et des rainures de codage (13), dans lesquelles s'engagent des parties saillantes (14), dirigées radialement vers l'intérieur, du bord intérieur (17) du disque (7, 27), et le corps de support (9) possédant des crochets d'encliquetage (15), qui s'étendent axialement et qui portent des boutons d'arrêt (16) dirigés radialement vers l'extérieur et entre lesquels les disques (7, 27) sont encliquetés de façon amovible pour le positionnement axial avec leur bord intérieur (17).

2. Dispositif à contacts glissants selon la revendication 1, **caractérisé en ce que** les surfaces de contact en forme de disques (3, 4, 23, 24) sont formées par au moins deux disques métalliques (7, 27).

3. Dispositif à contacts glissants selon la revendication 1, **caractérisé en ce que** les surfaces de contact à symétrie radiale sont des surfaces de contact en forme de disques d'un disque isolant qui est recouvert d'un métal en forme de disque des deux côtés.

4. Dispositif à contacts glissants selon l'une des revendications 1 à 3, **caractérisé en ce que** le corps de support (9) est formé d'un matériau isolant.

5. Dispositif à contacts glissants selon l'une des revendications 1 à 4, **caractérisé en ce qu'**au moins deux crochets d'encliquetage (15) sont répartis sur la périphérie du corps de support (9).

6. Dispositif à contacts glissants selon les revendications 1 à 5, **caractérisé en ce que** chaque crochet d'encliquetage (15) comporte des boutons d'arrêt (16) pour au moins deux positions du disque.

7. Dispositif à contacts glissants selon l'une des revendications précédentes, **caractérisé en ce que** le disque (7, 27) équipé des surfaces de contact (3, 4, 23, 24) situées des deux côtés comporte sur le bord intérieur (17) au moins une languette de contact (18) coudée dans la direction axiale.

8. Dispositif à contacts glissants selon la revendication 7, **caractérisé en ce que** la languette de contact (18) est agencée sous la forme d'un connecteur plat.

9. Dispositif à contacts glissants selon l'une des revendications précédentes, **caractérisé en ce que** les disques (7, 27) sont réalisés d'un seul tenant avec les surfaces de contact (3, 4, 23, 24) situées des deux côtés et avec une languette de contact coudée (18).

10. Dispositif à contacts glissants selon la revendication 7, **caractérisé en ce que** le disque (7, 27) est découpé à partir d'une pièce de tôle et conformé avec les surfaces de contact (3, 4, 23, 24) situées des deux côtés, avec des parties saillantes (14) dirigées radialement vers l'intérieur et une languette de contact (18) qui est dirigée vers la paroi intérieure (17) du disque (7, 27).

11. Dispositif à contacts glissants selon l'une des revendications 1 à 10, **caractérisé en ce que** le corps de support (9) est une pièce moulée par injection.

12. Dispositif à contacts glissants selon l'une des revendications précédentes, **caractérisé en ce qu'**au moins deux disques (7, 27) comportant des surfaces de contact en forme de disques (3, 4, 23, 24) situées des deux côtés et au moins respectivement une languette de contact (18) peuvent être emmanchées sur le corps de support (9) de telle sorte que les languettes de contact (18) sont disposées en étant réparties sur la périphérie du corps de support (9) et en étant isolées l'une de l'autre.

13. Dispositif à contacts glissants selon l'une des revendications précédentes, **caractérisé en ce que** les contacts glissants (5, 6, 25, 26), qui tournent avec le tambour à câble (1), sont agencés sous la forme de mâchoires glissantes (30), qui touchent en glissant sous précontrainte, par couples, les surfaces de contact en forme de disques (3, 4, 23, 24) du disque (7, 8).

14. Dispositif à contacts glissants selon la revendication 13, **caractérisé en ce que** les contacts glissants (5, 6, 25, 26), qui tournent avec le tambour à câble (1), sont agencés sous la forme de mâchoires glissantes (30) d'un seul tenant en une pièce de tôle découpée et conformée.

15. Dispositif à contacts glissants selon l'une des revendications 13 ou 14, **caractérisé en ce que** les mâchoires glissantes (30), qui tournent avec le tambour à câble (1), comportent chacune une languette de contact (19), qui convient pour une liaison à pincement et loge respectivement une extrémité (31, 32) du câble (33) du tambour à câble (1).

16. Dispositif à contacts glissants selon l'une des revendications 13 à 15, **caractérisé en ce que** les contacts glissants (5, 6, 25, 26), qui tournent avec le tambour à câble (1), enserrent des deux côtés le disque (7, 27) et sont réunis radialement vers l'extérieur à partir du bord extérieur (34) du disque, pour former une mâchoire glissante (30).
